# EUROPEAN PATENT SPECIFICATION

(11) **EP 4 559 136 B1**
(45) Date of publication and mention of the grant of the patent: **20.05.2026**
(21) Application number: 23754654.4
(22) Date of filing: 20.07.2023
(51) Int. Cl.: H04L 9/40, H04L 9/08, H04L 9/32

(54) **METHOD OF ACQUIRING AN OPERATIONAL CERTIFICATE**
VERFAHREN ZUR ERFASSUNG EINES BETRIEBSZERTIFIKATS
PROCÉDÉ D'ACQUISITION D'UN CERTIFICAT OPÉRATIONNEL

(30) Priority: 20.07.2022 US 202263368973 P
(43) Date of publication of application: 28.05.2025
(73) Proprietor: Landis+Gyr Technology, Inc., Alpharetta, GA 30022 (US)
(72) Inventor: CORNWALL, Craig, Alpharetta, Georgia 30022 (US); SCHACK, August, Alpharetta, Georgia 30022 (US); JOHNSON, Roland, Alpharetta, Georgia 30022 (US)
(74) Representative: Marks & Clerk LLP
(86) International application number: PCT/US2023/070570
(87) International publication number: WO 2024/020477

(56) References cited:
- EP-A1- 2 387 262
- US-A1- 2018 205 722

## Description

### TECHNICAL FIELD OF THE DISCLOSURE

The present disclosure is in the field of operational certificates for devices in networks such as Internet of Things (IoT) networks, and relates in particular to a method of acquiring an operational certificate for an application running on an authorized and/or authenticated host node in a network.

### BACKGROUND

Networked devices, such as IoT devices and Machine-to-Machine (M2M) devices may be capable of communicatively connecting with each other for inter-device communication and/or for interconnecting with other networks, cloud-based devices such as servers, or the internet. In an example, such networked devices may include smart utility meters for electricity, water or gas.

In an example, an IoT system may comprise IoT devices communicatively coupled with one another to exchange data. The IoT system may, for example, include a set of nodes that connect to a network, e.g., the internet or an intranet, either directly or indirectly through one or more additional layers of nodes.

Operations or functions on such IoT devices may require one or more operational certificates to ensure that the IoT device (or a user of the IoT device) is permitted to carry out said operations or functions. Typically, such operational certificates may identify functional and operational limits of the IoT device, such as a time period or expiry time for performing certain functions.

In an IoT system, there may be a need to acquire operational certificates that are signed by an authorized Certificate Authority (CA).

However, in some examples un-trusted or third-party software applications, known as 'apps', may be executed on an authorized node within the IoT system. It may be necessary for such software applications to acquire their own operational certificates for secure transport, e.g. to securely communicate with another node, server or device or the like within the IoT system.

For such an un-trusted or third-party software application to acquire its own operational certificate, it may be necessary for a valid certificate of the host device to be software application in order for the software application to authorize the request with the CA. However, this may require divulgence of information to the software application that may compromise a security of the host or even of the IoT system.

It is therefore desirable to provide means for acquiring an operational certificate for a software application executed on a host device in an IoT or M2M system, without divulging information to the software application that may compromise security.

It is therefore an aim of at least one embodiment of at least one aspect of the present disclosure to obviate or at least mitigate at least one of the above identified shortcomings of the prior art.

EP2387262A1 describes a system and a method for providing an operational certificate to a device, whereby the operational certificate is associated with one or more operations of the device. A manufacturing certificate authority, during the manufacture of the device, obtains identity information associated with the device and provides a manufacturing certificate to the device. An operational certificate authority obtains and authenticates at least a portion of the identity information associated with the device from the manufacturing certificate and, if at least the portion of the identity information is authenticated, the operational certificate is provided to the device.

US2018/205722A1 describes a method comprising: configuring, based on hardware characteristics of a radio access device, a first security certificate; setting up a first encrypted tunnel with a first security server using the first security certificate, the first security server configured to grant permission via the first security certificate for obtaining a second security certificate providing access to an operator core network; tearing down the first encrypted tunnel; and setting up a second encrypted tunnel to a second security server within the operator core network using the second security certificate, the second encrypted tunnel configured to allow the radio access device to securely communicate with the operator core network for providing connectivity for user devices to the operator core network, wherein the first encrypted tunnel and the second encrypted tunnel to use a single transport port to obtain the second security certificate via the first encrypted tunnel.

### SUMMARY

The present disclosure is in the field of operational certificates for devices in networks such as IoT networks, and relates in particular to a method of acquiring an operational certificate for an application running on an authorized and/or authenticated host node in a network.

According to a first aspect of the disclosure, there is provided a method of acquiring an operational certificate for an application running on an authorized and/or authenticated host node in a network, the method comprising:
transmitting, by the application, a request comprising a Certificate Signing Request (CSR) to a proxy engine running on the authorized and/or authenticated host node;
receiving, by the proxy engine, the request, and submitting the CSR to a Certificate Authority (CA);
signing, by the CA, the operational certificate and transmitting a response comprising the signed operational certificate to the proxy engine; and
forwarding, by the proxy engine, the signed operational certificate to the application.

Advantageously, such a method effectively proxies a request for a CSR for an operational certificate without divulging the details of a signed certificate of the host device, or details of a Public Key Infrastructure (PKI) framework, such as IP address of the CA (Certificate Authority).

In an example IoT environment there may be a need to acquire operational certificates (also known in the art as 'opcerts') that are signed by a known and/or authorized CA server. In an environment where there are un-trusted or third party software applications, e.g. 'apps', that are running on an authorized node, there may be a need for the software applications to acquire acquire one or more of their own operational certificates for secure transport. The above-described method may address this need.

That is, in a secure ecosystem for one or more software applications and any host system(s) that the one or more software applications may be running on, an authorized host node may use its credentials, e.g. its authorization and/or authentication, to acquire one or more operational certificates on behalf of the one or more software applications.

Furthermore, the disclosed method may reduce a system complexity, because implementation of the method may mitigate a requirement to communicate to a software application details of an infrastructure that may be required for the software application to able to request the operational certificate on its own.

The CA may be an authorized CA server. The CA may be an authorized CA proxy.

A proprietary protocol may be used for transmission, by the application, of the request comprising a Certificate Signing Request (CSR) to the proxy engine running on the authorized and/or authenticated host node.

Prior to receipt of the signed operational certificate, the application may be an untrusted application or application client running on the authorized and/or authenticated host node.

The network may comprise a Public Key infrastructure (PKI) configured for implementing an a priori method of authenticating/authorizing the host node.

That is, the above described signed certificate of the host device may be a so-called "birth certificate", e.g. a signed certificate issued and loaded into the host device at factory that provides authenticity for that unique host device.

The authentication/authorization of the host node may be based on a signed certificate issued and/or assigned to and/or installed on the host node during production of the host node.

That is, the "birth certificate" may be used as an authentication mechanism to acquire an operational certificate to use for normal secure transport flow operations.

The application may be configured to generate a public/private key pair. The request may comprises the public key for encrypting the response from the CA.

The response from the CA may comprise the operational certificate encrypted using the public key.

The method may comprise using the private key to decrypt the operational certificate encrypted using the public key.

The request may comprise a parameter, e.g. data, indicating a type of operational certificate.

The request may comprise a previous operational certificate.

That is, a payload of the request may comprise a 'cert type' indicating one or more types of operational certificate, such as TLS or signing, etc. The payload of the request may comprise the CSR. The payload of the request may comprise one or more previous operational certificates, for example if the request is for a renewal of one or more operational certificates. The payload of the request may comprise the public key used to encrypt the response back with the signed operational certificate.

The proxy engine may be an authenticated certificate manager configured to receive requests from the application requesting the CSR.

That is, the proxy engine may receive the operational certificate request and, using its own authentication, may create a connection to the CA (or CA proxy), and submit the CSR.

The network may be an Internet-of-Things (IoT) network.

According to a second aspect of the disclosure, there is provided a method of authenticating/authorizing an application in an IoT network, the method comprising acquiring, according to the method of any preceding claim, an operational certificate for the application.

Advantageously, the disclosed method may allow software applications running on the host to acquire operational certificates without manually adding authentication permissions to each software application individually, while also securing and/or masking details of any PKI framework.

According to a third aspect of the disclosure, there is provided a computer-readable storage medium comprising instructions which, when executed by a computer on an authorized and/or authenticated host node in a network, cause the computer to:
configure an application to transmit a request comprising a Certificate Signing Request (CSR) to a proxy engine running on the authorized and/or authenticated host node;
configure the proxy engine to receive the request, and submit the CSR to a Certificate Authority (CA);
configure the proxy engine to receive from the CA a response comprising the operational certificate singed by the CA;
configure the proxy engine to forward the signed operational certificate to the application.

According to a fourth aspect of the disclosure, there is provided a node device communicatively coupled to a network, the node device comprising and/or coupled to the computer-readable storage medium of the third aspect.

The node device may be configured as a smart utility meter for metering consumption of electricity, water or gas.

The above summary is intended to be merely exemplary and non-limiting. The disclosure includes one or more corresponding aspects, embodiments or features in isolation or in various combinations whether or not specifically stated (including claimed) in that combination or in isolation. It should be understood that features defined above in accordance with any aspect of the present disclosure or below relating to any specific embodiment of the disclosure may be utilized, either alone or in combination with any other defined feature, in any other aspect or embodiment or to form a further aspect or embodiment of the disclosure.

### BRIEF DESCRIPTION OF THE PREFERRED EMBODIMENTS

These and other aspects of the present disclosure will now be described, by way of example only, with reference to the accompanying drawings, wherein:
- Figure 1: depicts an example of a network for implementing a method of acquiring an operational certificate, according to an embodiment of the disclosure;
- Figure 2: a sequence diagram corresponding to a method of acquiring an operational certificate, according to an embodiment of the disclosure; and
- Figure 3: depicts a flow diagram of the method of acquiring an operational certificate, according to an embodiment of the disclosure.

### DETAILED DESCRIPTION OF THE PREFERRED EMBODIMENTS

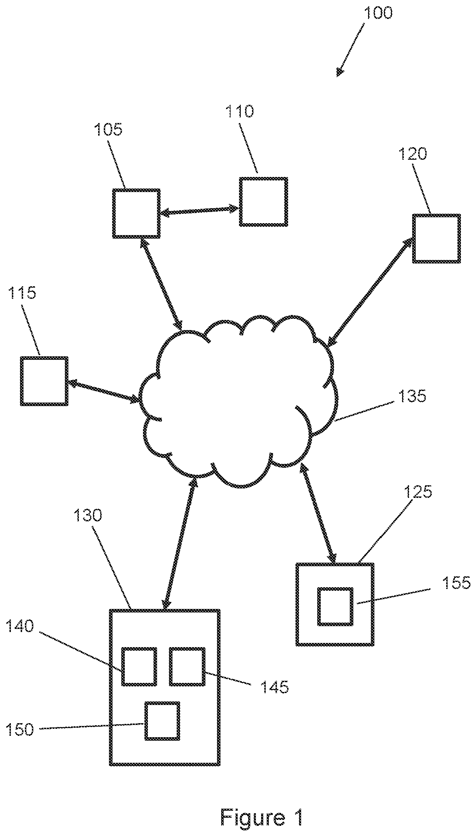

Figure 1 depicts an example of a network 100 for implementing a method of acquiring an operational certificate, according to an embodiment of the disclosure. The network comprises a plurality of nodes 105, 110, 115, 120, 125, 130.

In the example network 100, the plurality of nodes 105, 110, 115, 120, 125, 130 are communicatively coupled to the internet 135. Although the example of Figure 1 depicts connectivity to the internet 135, in other examples the plurality of nodes 105, 110, 115, 120, 125, 130 may be connected to an intranet. Furthermore, connectively may be through any known medium, such as wirelessly, optically, conductively, via one or more routers or gateways, or the like. That is, it will be understood that Figure 1 depicts implementation of a network 100 for illustrative purposes, and various other configurations of a network may implement the disclosed invention.

Furthermore, nodes of the network 100 may be indirectly connected to the internet 135, such as node 110 which is connected to the internet 135 via further node 105.

In the example, the network 100 may be an IoT network, e.g. a network 100 wherein the plurality of nodes 105, 110, 115, 120, 125, 130 may be embedded with sensors, software, and other technologies for the purpose of connecting and exchanging data with other devices and systems over the internet.

For example, one or more of the plurality of nodes 105, 110, 115, 120, 125, 130 may be configured as a smart utility meter for metering consumption of electricity, water or gas, and for communicating consumption information over the internet 135 to a utility company and/or pricing information to a consumer.

A first node 130 comprises processing capability for executing one or more software applications. In the example, a software application 140 is run on the first node 130. As such the first node 130 is a host device for the software application 140.

The first node 130 may be authorized and/or authenticated host node in the network 100. That is, the first node 130 may be authorized to communicate over the network 100, such as with one or more other of the plurality of nodes 105, 110, 115, 120, 125, 130 via the internet 135.

The first node 130 may comprise a signed certificate 150 which may be a so-called "birth certificate" as described-above, e.g. a signed certificate issued and loaded into/installed in the first node 130 during production of the first node 130 to provide authenticity for that unique first node 130 in the network 100.

In use, the software application 140 may be an untrusted and/or third party application.

In order for the software application 140 running on the authorized and/or authenticated first node 130 to be able to communicate over the network 100, it may be necessary for the software application 140 to acquire a signed operational certificate.

In use, the software application 140 may be configured to transmit a request comprising a CSR to a proxy engine 145 running on the authorized and/or authenticated first node 130. In examples, a proprietary protocol may be used for transmission, by the software application 140, of the request comprising a Certificate Signing Request (CSR) to the proxy engine 145 running on the authorized and/or authenticated first node 130. The software application 140 may be configured to generate a public/private key pair. The request may comprises the public key.

In some examples, a payload of the request may comprise a 'cert type' indicating one or more types of operational certificate, such as TLS or signing, etc. The payload of the request may comprise the CSR. The payload of the request may comprise one or more previous operational certificates, for example if the request is for a renewal of one or more previously issued and/or signed operational certificates. The payload of the request may comprise the public key used to encrypt the response back with the signed operational certificate.

The proxy engine 145 may receive the request and submit the CSR to a Certificate Authority (CA) 155.

For purposes of example only, the CA 155 is depicted as running on a second node 125 coupled to the internet 135. However, it will be understood the this is for example only, and the CA 155 may be implemented on a server, cloud-based device, edge-device or another part of the network 100, including non-depicted parts of the network 100. The CA 155 may be an authorized CA server. The CA 155 may be an authorized CA proxy.

The CA 155 may be configured to sign the operational certificate, and subsequently transmit a response comprising the signed operational certificate to the proxy engine 145. The response from the CA 155 may comprise the operational certificate encrypted using the public key.

The proxy engine 145 may be configured to forward the signed operational certificate to the software application 140.

In some examples, the software application 140 may be configured to use the private key to decrypt the operational certificate encrypted using the public key.

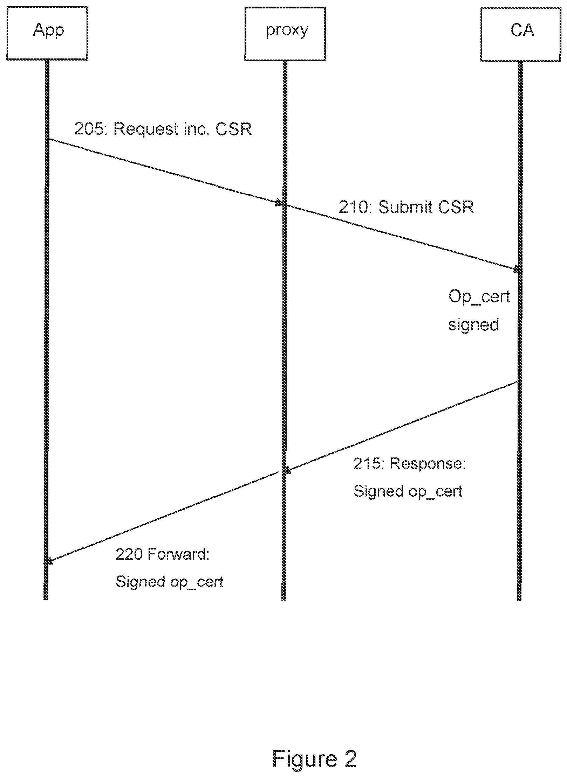

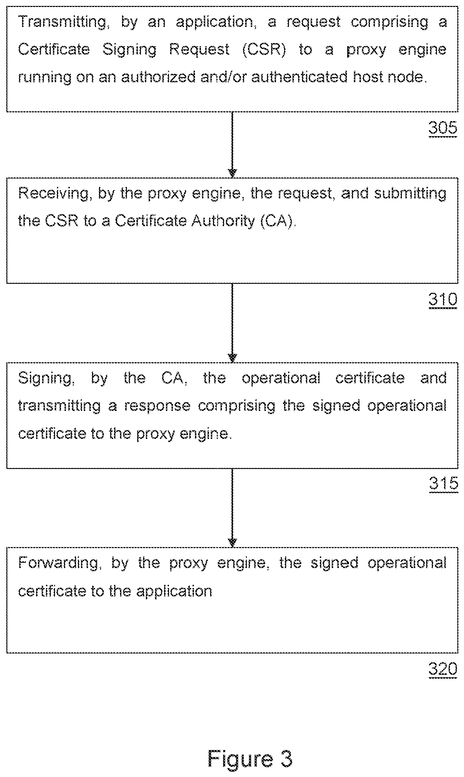

Figure 2 depicts a sequence diagram corresponding to a method of acquiring an operational certificate, according to an embodiment of the disclosure. The sequence diagram also corresponds to the flow diagram of Figure 3.

In a first event 205, the software application denoted "app", which may be the software application 140 of Figure 1, transmits a request comprising a payload to a proxy engine, denoted 'proxy'. The proxy engine may be the proxy engine 145 running on the authorized and/or authenticated first node 130 of the network 100 of Figure 1.

The payload of the request comprises a Certificate Signing Request (CSR). As described above, in other examples, the payload may also comprise one or more of: a 'cert type'; one or more previous operational certificates; and/or a public key used to encrypt the response back with the signed operational certificate. The first event corresponds to the first step 305 of the flow diagram of Figure 3.

In a second event 210, corresponding to the second step 310 of the flow diagram of Figure 3, the proxy engine submits the CSR to a Certificate Authority (CA). The CA may be the CA 155 of the network 100 of Figure 1.

In a third event 215, corresponding to the third step 315 of the flow diagram of Figure 3, the CA signs the operational certificate and transmits a response comprising the signed operational certificate to the proxy engine.

In a fourth event 220, corresponding to the fourth step 320 of the flow diagram of Figure 3, the proxy engine forwards the signed operational certificate to the software application.

Although the disclosure has been described in terms of particular embodiments as set forth above, it should be understood that these embodiments are illustrative only and that the claims are not limited to those embodiments. Those skilled in the art will be able to make modifications and alternatives in view of the disclosure, which are contemplated as falling within the scope of the appended claims. Each feature disclosed or illustrated in the present specification may be incorporated in any embodiments, whether alone or in any appropriate combination with any other feature disclosed or illustrated herein.

### LIST OF REFERENCE NUMERALS

- 100: network
- 105: node
- 110: node
- 115: node
- 120: node
- 125: node
- 130: first node
- 135: internet
- 140: software application
- 145: proxy engine
- 150: signed certificate
- 155: certificate authority
- 205: first event
- 210: second event
- 215: third event
- 220: fourth event
- 305: first step
- 310: second step
- 315: third step
- 320: fourth step

## Claims

1. A method of acquiring an operational certificate for an application (140) running on an authorized and/or authenticated host node (130) in a network (100), the method comprising:
transmitting, by the application (140), a request comprising a Certificate Signing Request, CSR, to a proxy engine (145) running on the authorized and/or authenticated host node;
receiving, by the proxy engine, the request, and submitting the CSR to a Certificate Authority, CA (155);
signing, by the CA (155), the operational certificate and transmitting a response comprising the signed operational certificate (150) to the proxy engine;
forwarding, by the proxy engine, the signed operational certificate (150) to the application.

2. The method of claim 1, wherein the CA (155) is an authorized CA server or an authorized CA proxy.

3. The method of claim 1 or 2, wherein prior to receipt of the signed operational certificate (150) the application (140) is an untrusted application or application client running on the authorized and/or authenticated host node (130).

4. The method of any preceding claim, wherein the network (100) comprises a Public Key infrastructure. PKI, configured for implementing an a priori method of authenticating/authorizing the host node (130).

5. The method of claim 4, wherein the authentication/authorization of the host node (130) is based on a signed certificate issued and/or assigned to and/or installed on the host node during production of the host node.

6. The method of any preceding claim, wherein the application (140) is configured to generate a public/private key pair, and wherein the request comprises the public key for encrypting the response from the CA (155).

7. The method of claim 6, wherein the response from the CA (155) comprises the operational certificate encrypted using the public key.

8. The method of claim 7, comprising using the private key to decrypt the operational certificate encrypted using the public key.

9. The method of any preceding claim, wherein the request comprises one or more of:
a parameter indicating a type of operational certificate; and/or
a previous operational certificate.

10. The method of any preceding claim, wherein the proxy engine (145) is an authenticated certificate manager configured to receive requests from the application requesting the CSR.

11. The method of any preceding claim, wherein the network (100) is an Internet-of- Things (IoT) network.

12. A method of authenticating/authorizing an application (140) in an IoT network (100), the method comprising acquiring, according to the method of any preceding claim, an operational certificate for the application.

13. A computer-readable storage medium comprising instructions which, when executed by a computer on an authorized and/or authenticated host node (130) in a network, (100) cause the computer to:
configure an application (140) to transmit a request comprising a Certificate Signing Request, CSR, to a proxy engine (145) running on the authorized and/or authenticated host node (130);
configure the proxy engine to receive the request, and submit the CSR to a Certificate Authority, CA (155);
configure the proxy engine to receive from the CA (155) a response comprising the operational certificate singed by the CA;
configure the proxy engine to forward the signed operational certificate (150) to the application (140).

14. A node device communicatively coupled to a network (100), the node device comprising and/or coupled to the computer-readable storage medium of claim 13.

15. The node device of claim 14, configured as a smart utility meter for metering consumption of electricity, water or gas.

## Patentansprüche

1. Verfahren zum Erwerb eines Betriebszertifikats für eine Anwendung (140), die auf einem autorisierten und/oder authentifizierten Hostknoten (130) in einem Netzwerk (100) läuft, wobei das Verfahren Folgendes umfasst:
Übermitteln durch die Anwendung (140) einer Anfrage, die eine Zertifikatsignierungsanforderung, CSR, umfasst, an eine Proxy-Engine (145), die auf dem autorisierten und/oder authentifizierter Hostknoten läuft;
Empfangen der Anfrage durch die Proxy-Engine und Vorlegen der CSR bei einer Zertifizierungsstelle, CA, (155);
Signieren des Betriebszertifikats durch die Zertifizierungsstelle (155) und Übermitteln einer Antwort, die das signierte Betriebszertifikat (150) umfasst, an die Proxy-Engine;
Weiterleiten des signierten Betriebszertifikats (150) durch die Proxy-Engine an die Anwendung.

2. Verfahren nach Anspruch 1, wobei es sich bei der CA (155) um einen autorisierten CA-Server oder einen autorisierten CA-Proxy handelt.

3. Verfahren nach Anspruch 1 oder 2, wobei die Anwendung (140) vor Erhalt des signierten Betriebszertifikats (150) eine nicht vertrauenswürdige Anwendung oder Anwendungsclient ist, der auf dem autorisierten und/oder authentifizierten Hostknoten (130) läuft.

4. Verfahren nach einem vorstehenden Anspruch, wobei das Netzwerk (100) eine Public-Key-Infrastruktur, PKI, umfasst, die so konfiguriert ist, dass sie ein Vorab -Verfahren des Authentifizierens/Autorisierens des Host-Knotens (130) implementiert.

5. Verfahren nach Anspruch 4, wobei Authentifizieren/Autorisieren des Host-Knotens (130) auf einem signierten Zertifikat basiert, das während der Produktion des Host-Knotens ausgestellt und/oder zugewiesen und/oder auf dem Host-Knoten installiert wurde.

6. Verfahren nach einem vorstehenden Anspruch, wobei die Anwendung (140) so konfiguriert ist, dass sie ein öffentliches/privates Schlüsselpaar erzeugt, und wobei die Anfrage den öffentlichen Schlüssel zur Verschlüsselung der Antwort von der CA (155) umfasst.

7. Verfahren nach Anspruch 6, wobei die Antwort von der CA (155) das mit dem öffentlichen Schlüssel verschlüsselte Betriebszertifikat umfasst.

8. Verfahren nach Anspruch 7, das Verwenden des privaten Schlüssels zum Entschlüsseln des mit dem öffentlichen Schlüssel verschlüsselten Betriebszertifikats umfasst.

9. Verfahren nach einem vorstehenden Anspruch, wobei die Anfrage eines oder mehreres umfasst von:
einem Parameter, der einen Typ von Betriebszertifikat angibt; und/oder
einem vorherigen Betriebszertifikat.

10. Verfahren nach einem vorstehenden Anspruch, wobei die Proxy-Engine (145) ein authentifizierter Zertifikatsmanager ist, der so konfiguriert ist, dass er Anfragen von der Anwendung, die die CSR anfordert, empfängt.

11. Verfahren nach einem vorstehenden Anspruch, wobei es sich bei dem Netzwerk (100) um ein Internet-of-Things-(iOT)-Netzwerk handelt.

12. Verfahren zum Authentifizieren/Autorisieren einer Anwendung (140) in einem loT-Netzwerk (100), wobei das Verfahren Erwerben eines Betriebszertifikats für die Anwendung gemäß dem Verfahren nach einem vorstehenden Anspruch umfasst.

13. Computerlesbares Speichermedium, das Anweisungen umfasst, die, wenn sie von einem Computer auf einem autorisierten und/oder authentifizierten Hostknoten (130) in einem Netzwerk, (100) ausgeführt werden, bewirken, dass der Computer Folgendes ausführt:
Konfigurieren einer Anwendung (140) so, dass sie eine Anfrage, die eine Zertifikatsignierungsanforderung, CSR, umfasst, an eine Proxy-Engine (145) übermittelt, die auf dem autorisierten und/oder authentifizierten Hostknoten (130) läuft;
Konfigurieren der Proxy-Engine so, dass sie die Anfrage empfängt und die CSR an eine Zertifizierungsstelle, CA, (155) übermittelt;
Konfigurieren der Proxy-Engine so, dass sie von der CA (155) eine Antwort empfängt, die das von der CA signierte Betriebszertifikat umfasst;
Konfigurieren der Proxy-Engine so, dass sie das signierte Betriebszertifikat (150) an die Anwendung (140) weiterleitet.

14. Knotenvorrichtung, die kommunikativ mit einem Netzwerk (100) gekoppelt ist, wobei die Knotenvorrichtung das computerlesbare Speichermedium nach Anspruch 13 umfasst und/oder damit gekoppelt ist.

15. Knotenvorrichtung nach Anspruch 14, die als intelligenter Verbrauchszähler zur Messung von Strom-, Wasser- oder Gasverbrauch konfiguriert ist.

## Revendications

1. Procédé d'acquisition d'un certificat opérationnel pour une application (140) s'exécutant sur un nœud hôte autorisé et/ou authentifié (130) dans un réseau (100), le procédé comprenant :
la transmission, par l'application (140), d'une demande comprenant une demande de signature de certificat, CSR, à un moteur proxy (145) s'exécutant sur le nœud hôte autorisé et/ou authentifié ;
la réception, par le moteur proxy, de la demande, et la soumission de la CSR à une autorité de certificat, CA (155) ;
la signature, par la CA (155), du certificat opérationnel et la transmission d'une réponse comprenant le certificat opérationnel signé (150) au moteur proxy ;
transmission, par le moteur proxy, du certificat opérationnel signé (150) à l'application.

2. Procédé selon la revendication 1, dans lequel la CA (155) est un serveur de CA autorisé ou un proxy de CA autorisé.

3. Procédé selon la revendication 1 ou 2, dans lequel, avant la réception du certificat opérationnel signé (150), l'application (140) est une application ou un client d'application non fiable s'exécutant sur le nœud hôte autorisé et/ou authentifié (130).

4. Procédé selon une quelconque revendication précédente, dans lequel le réseau (100) comprend une infrastructure à clé publique, PK1, configurée pour mettre en œuvre un procédé a priori d'authentification/autorisation du nœud hôte (130).

5. Procédé selon la revendication 4, dans lequel l'authentification/autorisation du nœud hôte (130) est basée sur un certificat signé émis et/ou assigné et/ou installé sur le nœud hôte pendant la production du nœud hôte.

6. Procédé selon une quelconque revendication précédente, dans lequel l'application (140) est configurée pour générer une paire de clés publique/privée, et dans lequel la demande comprend la clé publique pour chiffrer la réponse de la CA (155).

7. Procédé selon la revendication 6, dans lequel la réponse de la CA (155) comprend le certificat opérationnel chiffré en utilisant la clé publique.

8. Procédé selon la revendication 7, comprenant l'utilisation de la clé privée pour déchiffrer le certificat opérationnel chiffré en utilisant la clé publique.

9. Procédé selon une quelconque revendication précédente, dans lequel la demande comprend un ou plusieurs parmi :
un paramètre indiquant un type de certificat opérationnel ; et/ou
un certificat opérationnel précédent.

10. Procédé selon une quelconque revendication précédente, dans lequel le moteur proxy (145) est un gestionnaire de certificats authentifié configuré pour recevoir des demandes à partir de l'application demandant la CSR.

11. Procédé selon une quelconque revendication précédente, dans lequel le réseau (100) est un réseau Internet des objets (loT).

12. Procédé d'authentification/autorisation d'une application (140) dans un réseau loT (100), le procédé comprenant l'acquisition, conformément au procédé selon une quelconque revendication précédente, d'un certificat opérationnel pour l'application.

13. Support de stockage lisible par ordinateur comprenant des instructions qui, lorsqu'elles sont exécutées par un ordinateur sur un nœud hôte autorisé et/ou authentifié (130) dans un réseau (100), amènent l'ordinateur à :
configurer une application (140) pour transmettre une demande comprenant une demande de signature de certificat, CSR, à un moteur proxy (145) s'exécutant sur le nœud hôte autorisé et/ou authentifié (130) ;
configurer le moteur proxy pour recevoir la demande et soumettre la CSR à une autorité de certificat, CA (155) ;
configurer le moteur proxy pour recevoir à partir de la CA (155) une réponse comprenant le certificat opérationnel signé par la CA ;
configurer le moteur proxy pour transmettre le certificat opérationnel signé (150) à l'application (140).

14. Dispositif de nœud couplé en communication à un réseau (100), le dispositif de nœud comprenant et/ou étant couplé au support de stockage lisible par ordinateur selon la revendication 13.

15. Dispositif de nœud selon la revendication 14, configuré en tant que compteur de service intelligent pour compter la consommation d'électricité, d'eau ou de gaz.
